# EUROPEAN PATENT APPLICATION

(11) **EP 4 685 883 A1**
(43) Date of publication of application: **28.01.2026**
(21) Application number: 24844166.9
(22) Date of filing: 04.01.2024
(51) Int. Cl.: H01M 6/00, H01M 10/04

(54) **APPLYING MECHANISM**

(30) Priority: 25.07.2023 CN 202321979364 U
(71) Applicant: Sunwoda Mobility Energy Technology Co., Ltd., Shenzhen, Guangdong 518107 (CN)
(72) Inventor: MA, Zigang, Shenzhen, Guangdong 518107 (CN)
(74) Representative: Boult Wade Tennant LLP
(86) International application number: PCT/CN2024/070487
(87) International publication number: WO 2025/020464

(57) **Abstract**

A tape-applying mechanism belongs to the technical field of cell processing and manufacturing. The tape-applying mechanism includes a platform; a tape-applying assembly connected to the platform, an end of the tape-applying assembly being provided with an adsorption assembly and a groove arranged alternatively, and after the adsorption assembly adsorbs an adhesive tape, the adhesive tape being disposed corresponding to the groove; an anti-adhesion assembly connected to the platform and located on a side of the tape-applying assembly, the anti-adhesion assembly being adapted to reach a position opposite to the groove, and after the adsorption assembly adsorbs the adhesive tape, the anti-adhesion assembly being adapted to press the adhesive tape into the groove to form a redundant part on the adhesive tape.

## Description

This application claims priority to Chinese Patent Application No. 202321979364X, filed to the China National Intellectual Property Administration on July 25, 2023, and entitled "TAPE-APPLYING MECHANISM", which is incorporated herein by reference in its entirety.

### FIELD

The present disclosure belongs to the technical field of cell processing and manufacturing, and particularly relates to a tape-applying mechanism.

### BACKGROUND

A cell usually includes a plurality of bare cells, which are connected to each other by welding a connecting sheet to tabs of each of the bare cells. After the welding is completed, it is further necessary to apply a tab protective adhesive tape to the cell to serve as an insulation. In the prior art, in order to improve the efficiency of adhesive tape application, the cell is usually placed horizontally first before cell stacking, and then the adhesive tape is applied to a joint between the connecting sheet and the cell.

However, due to the lack of redundancy in the adhesive tape on an outer side of the cell, during cell stacking or cell expansion, a movable allowance of the tabs is greater than an allowance of the outer adhesive tape. This leads to situations such as the adhesive tape pulling the connecting sheet and the tabs, causing cracking of the tabs, and potential safety hazards are present.

### SUMMARY

The present disclosure provides a tape-applying mechanism to solve or at least partially solve problems existing in the prior art: due to the lack of redundancy in the adhesive tape on the outer side of the cell, during cell stacking or cell expansion, the adhesive tape will pull the connecting sheet and the tabs, causing the cracking of the tabs and other issues, and potential safety hazards are present.

In order to solve the above technical problem, the present disclosure is implemented as follows:

The present disclosure provides a tape-applying mechanism, including: a platform; a tape-applying assembly connected to the platform, an end of the tape-applying assembly being provided with an adsorption assembly and a groove arranged alternatively, and after the adsorption assembly adsorbs an adhesive tape, the adhesive tape being disposed corresponding to the groove; an anti-adhesion assembly connected to the platform and located on a side of the tape-applying assembly, the anti-adhesion assembly being adapted to reach a position opposite to the groove, and after the adsorption assembly adsorbs the adhesive tape, the anti-adhesion assembly being adapted to press the adhesive tape into the groove to form a redundant part on the adhesive tape.

Optionally, the tape-applying assembly includes a base, a first tape-applying assembly, and a second tape-applying assembly, the base is movably connected to the platform, each of the first tape-applying assembly and the second tape-applying assembly is connected to the base, and the first tape-applying assembly and the second tape-applying assembly are spaced apart to form the groove therebetween.

Optionally, the adsorption assembly includes a first adsorption member and a second adsorption member, the first adsorption member is disposed at an end of the first tape-applying assembly away from the base, and the second adsorption member is disposed at an end of the second tape-applying assembly away from the base. When the adsorption assembly adsorbs the adhesive tape, the first adsorption member adsorbs an end of the adhesive tape, the second adsorption member adsorbs an opposite end of the adhesive tape, and a middle part of the adhesive tape corresponds to the groove.

Optionally, the adsorption assembly further includes: a throttle valve connected to the base. Each of the first adsorption member and the second adsorption member is an adsorption hole, and the throttle valve is in communication with both the first adsorption member and the second adsorption member.

Optionally, the second tape-applying assembly is fixedly connected to the base. The tape-applying mechanism has a first direction and a second direction that intersect with each other, and the first tape-applying assembly is slidably connected to the base and adapted to slide in the first direction and the second direction.

Optionally, the first tape-applying assembly includes a connecting plate, a first air cylinder, and a connecting block. The connecting plate is slidably connected to the base. The first air cylinder includes a body and a driving rod slidably connected to the body, the body is connected to the base, an end of the connecting block is connected to the driving rod, the other end of the connecting block is connected to the connecting plate, and the first air cylinder is adapted to drive the connecting plate to move towards or away from the second tape-applying assembly through the connecting block.

Optionally, the first tape-applying assembly further includes: a fixing base and a buffer, where the fixing base is connected to the base, the buffer is connected to the fixing base, and an end of the buffer being located between the body and the connecting block. The buffer is adapted to buffer and limit the sliding of the connecting plate when the first air cylinder drives the connecting plate to move towards the second tape-applying assembly.

Optionally, the first tape-applying assembly further includes: a first tape-applying plate, a sliding block and a linear guide rail, where the sliding block is fixedly connected to the connecting plate, the linear guide rail extends along the second direction and is disposed on the first tape-applying plate, and the sliding block is slidably connected to the linear guide rail. The adsorption assembly is disposed at an end of the first tape-applying plate away from the base, and the first air cylinder is adapted to drive the connecting plate to move, thereby driving the first tape-applying plate to move towards or away from the second tape-applying assembly.

Optionally, the first tape-applying assembly further includes: a spring stopper and a spring, where the spring stopper is fixedly connected to the connecting plate and located at a side of the first tape-applying plate close to the base. The spring extends in the second direction, an end of the spring is connected to the spring stopper, and the other end of the spring is connected to the first tape-applying plate.

Optionally, the tape-applying mechanism further includes a moving assembly disposed on the platform. The tape-applying assembly is connected to the moving assembly, and/or the anti-adhesion assembly is connected to the moving assembly, enabling the anti-adhesion assembly to reach the position opposite to the groove.

The present disclosure provides the tape-applying assembly including the platform; the tape-applying assembly connected to the platform, an end of the tape-applying assembly being provided with the adsorption assembly and the groove arranged alternatively, and after the adsorption assembly adsorbs the adhesive tape, the adhesive tape being disposed corresponding to the groove; and the anti-adhesion assembly connected to the platform and located on a side of the tape-applying assembly, the anti-adhesion assembly being adapted to reach the position opposite to the groove, and after the adsorption assembly adsorbs the adhesive tape, the anti-adhesion assembly being adapted to press the adhesive tape into the groove to form the redundant part on the adhesive tape. In this way, a redundancy of the adhesive tape can be increased, and during cell stacking or cell expansion, situations such as the tabs damage caused by the adhesive tape pulling the connecting sheet and the tabs can be avoided, and the safety is improved.

The above description is merely an overview of the technical solutions of the present disclosure, and in order to be able to more clearly understand the technical means of the present disclosure, it may be implemented according to the contents of the specification, and in order to make the above and other objects, features and advantages of the present disclosure more comprehensible, specific embodiments of the present disclosure are described below.

### BRIEF DESCRIPTION OF DRAWINGS

In order to more clearly illustrate the technical solutions in embodiments of the present disclosure or the prior art, the accompanying drawings used in the embodiments or the prior art descriptions are briefly introduced below, and it is obvious that the drawings in the following description are some embodiments of the present disclosure, and for those skilled in the art, other drawings may be obtained based on these drawings without making creative efforts.
FIG. 1 shows a schematic structural diagram of a tape-applying mechanism according to an embodiment of the present disclosure;
FIG. 2 shows a side view of a tape-applying mechanism according to an embodiment of the present disclosure;
FIG. 3 shows a schematic structural diagram of a cell placed horizontally before cell stacking.

### Reference numerals:

1: first tape-applying assembly; 11: first adsorption member; 12: linear guide rail; 13: sliding block; 14: first tape-applying plate; 15: connecting plate; 16: spring stopper;
2: second tape-applying assembly; 21: second adsorption member;
3: anti-adhesion assembly;
41: first air cylinder; 42: buffer; 43: fixing base;
5: throttle valve;
6: base;
7: groove;
100: adhesive tape; 101: redundant part; 200: cell; 300: tab; 400: connecting sheet;
A: first direction; B: second direction.

### DETAILED DESCRIPTION

To make the purposes, technical solutions and advantages of embodiments of the present disclosure clearer, the technical solutions in embodiments of the present disclosure will be described clearly and completely hereinafter with reference to the accompanying drawings in embodiments of the present disclosure. Obviously, the described embodiments are a part of the embodiments of the present disclosure, rather than all embodiments. Based on embodiments in the present disclosure, all other embodiments obtained by those skilled in the art without making creative efforts shall fall within the scope of the present disclosure.

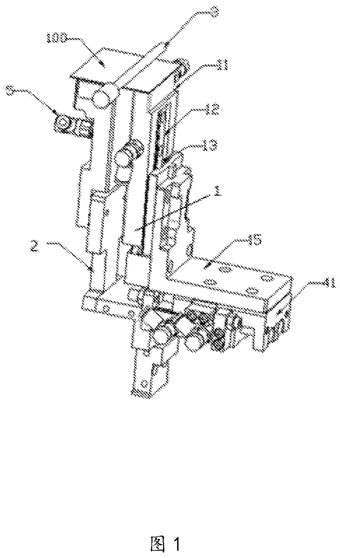

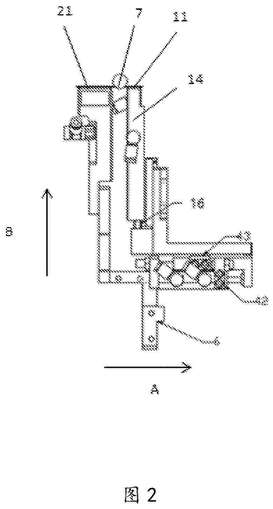

As shown in FIGS. 1 and 2, a tape-applying mechanism is provided by embodiments of the present disclosure. The tape-applying mechanism includes: a platform; a tape-applying assembly connected to the platform, an end of the tape-applying assembly being provided with an adsorption assembly and a groove 7 arranged alternatively, and after the adsorption assembly adsorbs an adhesive tape 100, the adhesive tape 100 being disposed corresponding to the groove 7; an anti-adhesion assembly 3 connected to the platform and located on a side of the tape-applying assembly, the anti-adhesion assembly 3 being adapted to reach a position opposite to the groove 7, and after the adsorption assembly adsorbs the adhesive tape 100, the anti-adhesion assembly 3 being adapted to press the adhesive tape 100 into the groove 7 to form a redundant part 101 on the adhesive tape 100.

As shown in FIGS. 1 and 2, the tape-applying mechanism in embodiments of the present application includes the platform, the tape-applying assembly, and the anti-adhesion assembly 3. The tape-applying assembly and the anti-adhesion assembly 3 are connected to the platform and supported by the platform. The platform may be a support plate or a support base. In embodiments of the present disclosure, no excessive limitations are imposed on the specific type of the platform, and any platform capable of supporting the tape-applying assembly and the anti-adhesion assembly 3 is acceptable.

The tape-applying assembly is connected to the platform, and an end of the tape-applying assembly is provided with the adsorption assembly and the groove 7 arranged alternatively. When the adhesive tape 100 is placed on the end of the tape-applying assembly, the adsorption assembly can adsorb the adhesive tape 100, so that the adhesive tape 100 is disposed opposite to the groove 7.

Illustratively, the adsorption assembly may include an adsorption hole and a negative pressure device, the adsorption hole is disposed at an end of the tape-applying assembly, and the negative pressure device is communicated with the adsorption hole. When the adhesive tape 100 is placed on the adsorption hole, the adhesive tape 100 will be adsorbed onto the end of the tape-applying assembly by the negative pressure device generating negative pressure. A plurality of adsorption holes can be provided, and the plurality of adsorption holes are arranged at intervals at the end of the tape-applying assembly and all communicated with the negative pressure device, so that the adhesive tape 100 is adsorbed to the end of the tape-applying assembly through the plurality of adsorption holes, thereby improving the reliability of the adsorption assembly in adsorbing the adhesive tape 100.

The anti-adhesion assembly 3 is connected to the platform and located on a side of the tape-applying assembly, and the anti-adhesion assembly 3 can reach the position opposite to the groove 7. Specifically, the anti-adhesion assembly 3 may be movably connected to the platform, the tape-applying assembly is fixedly connected to the platform, and the anti-adhesion assembly 3 can be moved to the position opposite to the groove 7. Alternatively, the tape-applying assembly 3 may be movably connected to the platform, the anti-adhesion assembly 3 is fixedly connected to the platform, and the groove 7 can be opposite to the anti-adhesion assembly 3 by moving the tape-applying assembly. Of course, each of the anti-adhesion assembly 3 and the tape-applying assembly may be movably connected to the platform, and the anti-adhesion assembly 3 and the tape-applying assembly can be moved closer to each other, so that the groove 7 and the anti-adhesion assembly 3 are disposed opposite to each other. In this regard, embodiments of the present disclosure do not impose specific limitations, and in actual use, technicians may configure as needed.

When the adsorption assembly adsorbs the adhesive tape 100, the anti-adhesion assembly 3 may press the adhesive tape 100 into the groove 7 to form the redundant part 101 on the adhesive tape 100. Illustratively, the anti-adhesion assembly 3 may include an anti-adhesion rod, and when the adsorption assembly adsorbs the adhesive tape 100, the anti-adhesion rod may press the adhesive tape 100 into the groove, so that the redundant part 101 may be formed on the adhesive tape 100.

Embodiments of the present disclosure provides the tape-applying assembly including the platform; the tape-applying assembly connected to the platform, an end of the tape-applying assembly being provided with the adsorption assembly and the groove 7 arranged alternatively, and after the adsorption assembly adsorbs the adhesive tape 100, the adhesive tape 100 being disposed corresponding to the groove 7; and the anti-adhesion assembly 3 connected to the platform and located on a side of the tape-applying assembly, the anti-adhesion assembly 3 being adapted to reach the position opposite to the groove 7, and after the adsorption assembly adsorbs the adhesive tape 100, the anti-adhesion assembly being adapted to press the adhesive tape 100 into the groove 7 to form the redundant part 101 on the adhesive tape 100. The adhesive tape 100 provided with the redundant part 101 is applied between a connecting sheet 400 and a cell 200, and during cell stacking or cell expansion, the redundant part 101 can increase the redundancy of the adhesive tape 100, thereby preventing the adhesive tape 100 from pulling the connecting sheet 400 and the tab 300 to cause damage, and improving safety performance.

As an optional implementation, as shown in FIGS. 1 and 2, the tape-applying assembly includes a base 6, a first tape-applying assembly 1, and a second tape-applying assembly 2. The base 6 is movably connected to the platform, each of the first tape-applying assembly 1 and the second tape-applying assembly 2 is connected to the base 6, and the first tape-applying assembly 1 and the second tape-applying assembly 2 are spaced apart to form the groove 7 between the first tape-applying assembly 1 and the second tape-applying assembly 2.

As shown in FIGS. 1 and 2, the base 6 in embodiments of the present disclosure is movably connected to the platform, and the first tape-applying assembly 1 and the second tape-applying assembly 2 are connected to the base 6. The first tape-applying assembly 1 and the second tape-applying assembly 2 are spaced apart to form the groove 7 therebetween.

The first tape-applying assembly 1 may be fixedly connected to the base 6, and the second tape-applying assembly 2 may be slidably connected to the base 6 to change a size of the groove 7 by sliding the second tape-applying assembly 2, thereby changing a size of the redundant part 101. Alternatively, the second tape-applying assembly 2 may be fixedly connected to the base 6, the first tape-applying assembly 1 is slidably connected to the base 6 to change the size of the groove 7 by sliding the first tape-applying assembly 1, thereby changing the size of the redundant part 101. Of course, alternatively, each of the first tape-applying assembly 1 and the second tape-applying assembly 2 may be slidably connected to the base 6 to change the size of the groove 7 by sliding the first tape-applying assembly 1 and the second tape-applying assembly 2 relative to each other, thereby changing the size of the redundant part 101. In this regard, embodiments of the present disclosure do not impose specific limitations.

As an optional implementation, as shown in FIGS. 1 and 2, the adsorption assembly includes a first adsorption member 11 and a second adsorption member 21, the first adsorption member 11 is disposed at an end of the first tape-applying assembly 1 away from the base 6, and the second adsorption member 21 is disposed at an end of the second tape-applying assembly 2 away from the base 6. When the adsorption assembly adsorbs the adhesive tape 100, the first adsorption member 11 adsorbs an end of the adhesive tape 100, the second adsorption member 21 adsorbs an opposite end of the adhesive tape 100, and a middle part of the adhesive tape 100 corresponds to the groove 7.

In embodiments of the present disclosure, as shown in FIGS. 1 and 2, the first adsorption member 11 is disposed at an end of the first tape-applying assembly 1 away from the base 6, and the second adsorption member 21 is disposed at an end of the second tape-applying assembly 2 away from the base 6. When the adsorption assembly adsorbs the adhesive tape 100, an end of the adhesive tape 100 can be adsorbed by the first adsorption member 11, and the other end of the adhesive tape 100 can be adsorbed by the second adsorption member 21, so that the middle part of the adhesive tape 100 corresponds to the groove 7, and the anti-adhesion assembly 3 can press the middle part of the adhesive tape 100 into the groove 7, thereby forming the redundant part 101 in the middle part of the adhesive tape 100.

It should be noted that, in embodiments of the present disclosure, the first adsorption member 11 and the second adsorption member 21 may be adsorption holes, or may be adsorption cups, or may be any other adsorption members that facilitate the adsorption of the adhesive tape 100. For the specific structure of the first adsorption member 11 and the second adsorption member 21, embodiments in the present disclosure do not impose specific limitations, and in actual use, technicians may configure as needed.

As an optional implementation, as shown in FIGS. 1 and 2, the adsorption assembly further includes a throttle valve 5 connected to the base 6. Each of the first adsorption member 11 and the second adsorption member 21 is an adsorption hole, and the throttle valve 5 is in communication with both the first adsorption member 11 and the second adsorption member 21.

In embodiments of the present disclosure, the adsorption assembly further includes the throttle valve 5, and the throttle valve 5 is connected to the base 6. The first adsorption member 11 and the second adsorption member 21 are both provided as adsorption holes, and the throttle valve 5 is communicated with the first adsorption member 11 and the second adsorption member 21. Thereby, the adsorption holes can be evacuated through the throttle valve 5, enabling the adhesive tape 100 to be adsorbed onto an end of the first tape-applying assembly 1 away from the base 6 and an end of the second tape-applying assembly 2 away from the base 6, so as to secure the adhesive tape 100, thereby preventing the adhesive tape 100 from detaching from the tape-applying assembly during the manufacturing process of the redundant part 101.

As an optional embodiment, as shown in FIGS. 1 and 2, the second tape-applying assembly 2 is fixedly connected to the base 6. The tape-applying mechanism has a first direction A and a second direction B that intersect with each other, and the first tape-applying assembly 1 is slidably connected to the base 6 and is adapted to slide along the first direction A and the second direction B. In embodiments of the present disclosure, the first direction A is a length direction of the tape-applying mechanism, and the second direction B is a height direction of the tape-applying mechanism.

As shown in FIGS. 1 and 2, in embodiments of the present disclosure, the second tape-applying assembly 2 is fixedly connected to the base 6, the first tape-applying assembly 1 is slidably connected to the base 6, and the first tape-applying assembly 1 may slide along the first direction A and the second direction B. The first direction A intersects with the second direction B. Preferably, the first direction A is perpendicular to the second direction B. Hereinafter, the case where the first direction A is perpendicular to the second direction B is taken as an example for illustration.

In embodiments of the present disclosure, the first tape-applying assembly 1 slides along the first direction A, and a distance between the first tape-applying assembly 1 and the second tape-applying assembly 2 can be changed, thereby changing the size of the groove 7, and further changing the size of the redundant part 101 on the adhesive tape 100.

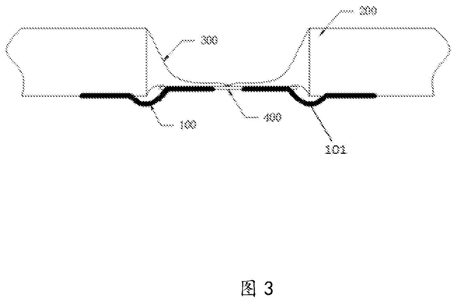

In embodiments of the present disclosure, the first tape-applying assembly 1 may slide in the second direction B to change the height of the first tape-applying assembly 1. As shown in FIG. 3, before tape application, after the cell 200 and the connecting sheet 400 are placed horizontally in position, the heights of the cell 200 and the connecting sheet 400 are different. During tape application, the base is driven to move or a clamp that clamps the cell 200 and the connecting sheet 400 is driven to move, so that the tape-applying assembly moves towards the cell 200 and the connecting sheet 400 until the first tape-applying assembly 1 and the second tape-applying assembly 2 respectively abut against the cell 200 and the connecting sheet 400. It can be understood that, since the height of the cell 200 is different from the height of the connecting sheet 400, during tape application, the first tape-applying assembly 1 will firstly abut against the cell 200, and then in the process of continuing to move until the second tape-applying assembly 2 abuts against the connecting sheet 400, in order to avoid crushing damage to the cell 200 caused by the first tape-applying assembly 1, the first tape-applying assembly 1 is configured to be slidable along the second direction B, thereby improving the product yield.

As an optional implementation, as shown in FIGS. 1 and 2, the first tape-applying assembly 1 includes a connecting plate 15, a first air cylinder 41, and a connecting block. The connecting plate 15 is slidably connected to the base 6. The first air cylinder 41 includes a body and a driving rod slidably connected to the body. The body is connected to the base 6. An end of the connecting block is connected to the driving rod, the other end of the connecting block is connected to the connecting plate 15. The first air cylinder 41 can drive the connecting plate 15 to move towards or away from the second tape-applying assembly 2 through the connecting block.

In embodiments of the present disclosure, as shown in FIGS. 1 and 2, the connecting plate 15 is slidably connected to the base 6, the body of the first air cylinder 41 is connected to the base 6, an end of the connecting block is connected to the driving rod of the first air cylinder 41, the other end of the connecting block is connected to the connecting plate 15. Under the driving of the body of the first air cylinder 41, the driving rod of the first air cylinder 41 slides relative to the body of the first air cylinder 41, so that the connecting plate 15 is driven to move towards or away from the second tape-applying assembly 2 by the connecting block, thereby changing the size of the groove 7, enabling the tape-applying assembly to apply tapes to cells of different specifications.

As an optional embodiment, as shown in FIG. 2, the first tape-applying assembly 1 further includes a fixing base 43 and a buffer 42. The fixing base 43 is connected to the base 6, the buffer 42 is connected to the fixing base 43, an end of the buffer 42 is located between the body and the connecting block, and the buffer 42 is capable of buffering and limiting the sliding of the connecting plate 15 when the first air cylinder 41 drives the connecting plate 15 to move towards the second tape-applying assembly 2.

As shown in FIG. 2, in embodiments of the present disclosure, the fixing base 43 is connected to the base 6, the buffer 42 is connected to the fixing base 43, and an end of the buffer 42 is disposed between the body and the connecting block, so that when the first air cylinder 41 drives the connecting plate 15 to move towards the second tape-applying assembly 2, the buffer 42 can buffer and limit the sliding of the connecting plate 15, thereby providing a corresponding spacing between the second tape-applying assembly 2 and the first tape-applying assembly 1, and preventing the first tape-applying assembly 1 from colliding with the second tape-applying assembly 2.

As an optional implementation, as shown in FIGS. 1 and 2, the first tape-applying assembly 1 further includes a first tape-applying plate 14, a sliding block 13, and a linear guide rail 12. The sliding block 13 is fixedly connected to the connecting plate 15, the linear guide rail 12 extends along the second direction B and is disposed on the first tape-applying plate 14, and the sliding block 13 is slidably connected to the linear guide rail 12. The adsorption assembly is disposed at an end of the first tape-applying plate 14 away from the base 6, and the first air cylinder 41 is capable of driving the connecting plate 15 to move, thereby driving the first tape-applying plate 14 to move towards or away from the second tape-applying assembly 2.

In embodiments of the present disclosure, as shown in FIGS. 1 and 2, the sliding block 13 is fixedly connected to the connecting plate 15, the linear guide rail 12 is disposed on the first tape-applying plate 14, the linear guide rail 12 extends in the second direction B, and the linear guide rail 12 is slidably connected to the sliding block 13. The adsorption assembly is disposed at an end of the first tape-applying plate 14 away from the base 6. Specifically, the first adsorption member 11 is disposed at an end of the first tape-applying plate 14 away from the base 6. Through the cooperation of the linear guide rail 12 and the sliding block 13, the movement of the first tape-applying plate 14 in the second direction B is more stable.

It should be noted that, in embodiments of the present disclosure, the first air cylinder 41 may drive the connecting plate 15 to move. Specifically, the first air cylinder 41 may drive the connecting plate 15 to move in the first direction A, thereby driving the first tape-applying plate 14 to move towards or away from the second tape-applying assembly 2, and thus changing the size of the groove 7.

As an optional implementation, as shown in FIGS. 1 and 2, the first tape-applying assembly 1 further includes a spring stopper 16 and a spring. The spring stopper 16 is fixedly connected to the connecting plate 15 and located at a side of the first tape-applying plate 14 close to the base 6. The spring extends in the second direction B, an end of the spring is connected to the spring stopper 16, and the other end is connected to the first tape-applying plate 14.

In embodiments of the present disclosure, as shown in FIGS. 1 and 2, the spring stopper 16 is fixedly connected to the connecting plate 15, and the spring stopper 16 is disposed on a side of the first tape-applying plate 14 close to the base 6. The spring extends along the second direction B, an end of the spring is connected to the spring stopper 16, and the other end of the spring is connected to the first tape-applying plate 14. In embodiments of the present disclosure, as can be understood, the provision of the spring stopper 16 and the spring enables the first tape-applying plate 14 to automatically rebound along the second direction B and return to its initial state. Specifically, since the height of the cell 200 is different from the height of the connecting sheet 400, during tape application, the first tape-applying plate 14 firstly abuts against the cell 200, and then in the processing of continuing to move until the second tape-applying assembly 2 abuts against the connecting sheet 400, the cell 200 presses the first tape-applying plate 14, causing the first tape-applying plate 14 to move in an opposite direction of the second direction B, thereby compressing the spring. After tape application is completed, the first tape-applying plate 14 moves away from the cell 200, and at this point, the spring provides a restoring force to push the first tape-applying plate 14 to return to its initial position.

It should be noted that a first stopping part may be disposed at an end of the spring stopper 16 close to the first tape-applying plate 14, a second stopping part is disposed at an end of the first adsorption member 11 close to the spring stopper 16, and the spring is clamped between the first stopping part and the second stopping part.

As an optional implementation, the tape-applying mechanism further includes a moving assembly, the moving assembly is disposed on the platform. The tape-applying assembly is connected to the moving assembly, and/or the anti-adhesion assembly 3 is connected to the moving assembly, so that the anti-adhesion assembly 3 can reach the position opposite to the groove 7.

The tape-applying mechanism in embodiments of the present disclosure is further provided with the moving assembly, and the moving assembly is connected to the platform. In embodiments of the present disclosure, the tape-applying assembly may be connected to the moving assembly and the moving assembly drives the tape-applying assembly to move to enable the groove 7 on the tape-applying assembly to reach the position opposite to the anti-adhesion assembly 3. Alternatively, the anti-adhesion assembly 3 may be connected to the moving assembly, and the moving assembly drives the anti-adhesion assembly 3 to move to enable the anti-adhesion assembly 3 to reach the position opposite to the groove 7. Of course, alternatively, both the tape-applying assembly and the anti-adhesion assembly 3 may be connected to the moving assembly, and the moving assembly drives the tape-applying assembly and the anti-adhesion assembly to move to enable the anti-adhesion assembly 3 to be opposite to the groove 7. In this regard, embodiments of the present disclosure do not impose specific limitations, and in actual use, technicians may configure as needed.

Embodiments of the present disclosure provides the tape-applying assembly including the platform; the tape-applying assembly connected to the platform, an end of the tape-applying assembly being provided with the adsorption assembly and the groove 7 arranged alternatively, and after the adsorption assembly adsorbs the adhesive tape 100, the adhesive tape 100 being disposed corresponding to the groove 7; and the anti-adhesion assembly 3 connected to the platform and located on a side of the tape-applying assembly, the anti-adhesion assembly 3 being adapted to reach the position opposite to the groove 7, and after the adsorption assembly adsorbs the adhesive tape 100, the anti-adhesion assembly being adapted to press the adhesive tape 100 into the groove 7 to form the redundant part 101 on the adhesive tape 100. The adhesive tape 100 provided with the redundant part 101 is applied between the connecting sheet 400 and the cell 200, and during cell stacking or cell expansion, the redundant part 101 can increase the redundancy of the adhesive tape 100, thereby preventing the adhesive tape 100 from pulling the connecting sheet 400 and the tab 300 to cause damage, and improving safety performance.

Device embodiments described above are merely illustrative, where the units described as separate components may or may not be physically separate, and the components shown as units may or may not be physical units, that is, they may be located in one place, or may be distributed to multiple network units. Some or all of the modules may be selected according to actual needs to achieve purposes of the solution of embodiments. Those skilled in the art can understand and implement without making creative work.

Reference herein to "an embodiment", "embodiments", or "one or more embodiments" means that a specific feature, structure, or characteristic described in connection with an embodiment is included in at least one embodiment of the present disclosure. In addition, it should be noted that the instances of the phrase "in an embodiment" herein do not necessarily all refer to the same embodiment.

In the description provided herein, numerous specific details are illustrated. It is to be understood, however, that embodiments of the present disclosure may be practiced without these specific details. In some instances, well-known methods, structures, and techniques are not shown in detail so as not to obscure the understanding of the present specification.

In the claims, any reference numerals located between parentheses should not be construed as limitations on the claims. The word "comprise" does not exclude the presence of elements or steps that are not listed in the claims. The word "a" or "an" preceding an element does not exclude the presence of multiple such elements. The present disclosure may be implemented by means of hardware including several different elements and by means of appropriately programmed computers. In a unit claim reciting several devices, several of these devices may be embodied by the same hardware item. The use of words first, second, and third does not represent any order. These words may be interpreted as names.

Finally, it should be noted that the above embodiments are only used to illustrate the technical solutions of the present disclosure, but are not limited thereto; although the present disclosure has been described in detail with reference to the foregoing embodiments, those skilled in the art should understand that the technical solutions described in the foregoing embodiments may still be modified, or some technical features thereof may be equivalently replaced; and these modifications or replacements do not cause the essence of the corresponding technical solutions to depart from the spirit and scope of the technical solutions of embodiments of the present disclosure.

## Claims

1. A tape-applying mechanism, comprising:
a platform;
a tape-applying assembly connected to the platform, an end of the tape-applying assembly being provided with an adsorption assembly and a groove (7) arranged alternatively, and after the adsorption assembly adsorbs an adhesive tape (100), the adhesive tape (100) being disposed corresponding to the groove (7);
an anti-adhesion assembly (3) connected to the platform and located on a side of the tape-applying assembly, the anti-adhesion assembly (3) being adapted to reach a position opposite to the groove (7), and after the adsorption assembly adsorbs the adhesive tape (100), the anti-adhesion assembly (3) being adapted to press the adhesive tape (100) into the groove (7) to form a redundant part (101) on the adhesive tape (100).

2. The tape-applying mechanism according to claim 1, wherein the tape-applying assembly comprises a base (6), a first tape-applying assembly (1), and a second tape-applying assembly (2),
the base (6) is movably connected to the platform, each of the first tape-applying assembly (1) and the second tape-applying assembly (2) is connected to the base (6), and the first tape-applying assembly (1) and the second tape-applying assembly (2) are spaced apart to form the groove (7) therebetween.

3. The tape-applying mechanism according to claim 2, wherein the adsorption assembly comprises a first adsorption member (11) and a second adsorption member (21), the first adsorption member (11) is disposed at an end of the first tape-applying assembly (1) away from the base (6), and the second adsorption member (21) is disposed at an end of the second tape-applying assembly (2) away from the base (6);
when the adsorption assembly adsorbs the adhesive tape (100), the first adsorption member (11) adsorbs an end of the adhesive tape (100), the second adsorption member (21) adsorbs an opposite end of the adhesive tape (100), and a middle part of the adhesive tape (100) corresponds to the groove (7).

4. The tape-applying mechanism according to claim 3, wherein the adsorption assembly further comprises:
a throttle valve (5) connected to the base (6);
each of the first adsorption member (11) and the second adsorption member (21) is an adsorption hole, and the throttle valve (5) is in communication with both the first adsorption member (11) and the second adsorption member (21).

5. The tape-applying mechanism according to claim 2, wherein the second tape-applying assembly (2) is fixedly connected to the base (6);
the tape-applying mechanism has a first direction (A) and a second direction (B) that intersect with each other, and the first tape-applying assembly (1) is slidably connected to the base (6) and adapted to slide in the first direction (A) and the second direction (B).

6. The tape-applying mechanism according to claim 5, wherein the first tape-applying assembly (1) comprises a connecting plate (15), a first air cylinder (41), and a connecting block,
the connecting plate (15) is slidably connected to the base (6),
the first air cylinder (41) comprises a body and a driving rod slidably connected to the body, the body is connected to the base (6), an end of the connecting block is connected to the driving rod, the other end of the connecting block is connected to the connecting plate (15), and the first air cylinder (41) is adapted to drive the connecting plate (15) to move towards or away from the second tape-applying assembly (2) through the connecting block.

7. The tape-applying mechanism according to claim 6, wherein the first tape-applying assembly (1) further comprises:
a fixing base (43) and a buffer (42), the fixing base (43) being connected to the base (6), the buffer (42)being connected to the fixing base (43), an end of the buffer (42) being located between the body and the connecting block, and the buffer (42) being adapted to buffer and limit the sliding of the connecting plate (15) when the first air cylinder (41) drives the connecting plate (15) to move towards the second tape-applying assembly (2).

8. The tape-applying mechanism according to claim 6, wherein the first tape-applying assembly (1) further comprises: a first tape-applying plate (14), a sliding block (13), and a linear guide rail (12),
the sliding block (13) is fixedly connected to the connecting plate (15), the linear guide rail (12) extends along the second direction (B) and is disposed on the first tape-applying plate (14), and the sliding block (13) is slidably connected to the linear guide rail (12);
the adsorption assembly is disposed at an end of the first tape-applying plate (14) away from the base (6), and the first air cylinder (41) is adapted to drive the connecting plate (15) to move, thereby driving the first tape-applying plate (14) to move towards or away from the second tape-applying assembly (2).

9. The tape-applying mechanism according to claim 8, wherein the first tape-applying assembly (1) further comprises a spring stopper (16) and a spring,
the spring stopper (16) is fixedly connected to the connecting plate (15) and located at a side of the first tape-applying plate (14) close to the base (6);
the spring extends in the second direction (B), an end of the spring is connected to the spring stopper (16), and the other end of the spring is connected to the first tape-applying plate (14).

10. The tape-applying mechanism according to claim 1, wherein the tape-applying mechanism further comprises a moving assembly disposed on the platform;
the tape-applying assembly is connected to the moving assembly to enable the anti-adhesion assembly (3) to reach the position opposite to the groove (7).

11. The tape-applying mechanism according to claim 1, wherein the tape-applying mechanism further comprises a moving assembly disposed on the platform;
the anti-adhesion assembly (3) is connected to the moving assembly to enable the anti-adhesion assembly (3) to reach the position opposite to the groove (7).

12. The tape-applying mechanism according to claim 1, wherein the tape-applying mechanism further comprises a moving assembly disposed on the platform;
each of the tape-applying assembly and the anti-adhesion assembly (3) is connected to the moving assembly to enable the anti-adhesion assembly (3) to reach the position opposite to the groove (7).
